# DEMANDE DE BREVET EUROPEEN

(11) **EP 1 931 008 A2**
(43) Date de publication de la demande: **11.06.2008**
(21) Numéro de dépôt: 07301606.5
(22) Date de dépôt: 30.11.2007
(51) Int. Cl.: H02H 3/087

(54) **Procédé et dispositif de gestion de courants anormaux dans un réseau électrique de vehicule automobile**

(30) Priorité: 08.12.2006 FR 0655400
(71) Demandeur: PEUGEOT CITROËN AUTOMOBILES S.A., 78140 Vélizy Villacoublay (FR)
(72) Inventeur: Léduc, Edouard Pierre, 78960, VOISINS LE BRETONNEUX (FR); Boucly, Bernard, 78150, LE CHESNAY (FR); Olszewski, Dimitri, 78250, LE CHESNAY (FR)
(74) Mandataire: Pinchon, Odile

(57) **Abrégé**

L'invention se rapporte à un procédé de gestion des courants anormaux d'organes consommateurs, dans le réseau électrique d'un véhicule à l'arrêt, le procédé comportant les étapes suivantes :
- on mesure (35) la valeur du courant (39) dans au moins un organe consommateur en veille implanté dans le véhicule, dit organe à gérer,
- on compare (38) cette valeur (39) à une valeur (37) correspondant à la consommation typique de cet organe en mode veille, dite valeur de référence, et
dans le cas où la valeur mesurée (39) est supérieure à la valeur de référence (37) pendant une durée prédéterminée, on limite (38) l'alimentation en courant de l'organe consommateur en veille.

## Description

La présente invention concerne un procédé et un dispositif de gestion des courants anormaux dans un réseau électrique de véhicule automobile.

De manière plus précise, l'invention concerne un procédé et dispositif utilisable pendant les périodes de veille des organes consommateurs de courant installés dans un véhicule.

Par « organe consommateur », on désigne tout type d'organe électrique, électronique, électromécanique ou électrohydraulique installé dans un réseau électrique.

Dans les systèmes existants, les conducteurs d'un réseau de distribution électrique sont protégés par des fusibles. Le principe du fusible est de fondre lorsque l'intensité du courant qui le traverse devient trop élevée, provoquant ainsi la coupure de l'alimentation du circuit précisément où il est installé.

Généralement, les fusibles sont calibrés de telle sorte qu'ils acceptent les courants nominaux des organes consommateurs en aval. Or, dans un réseau électrique comme celui d'un véhicule automobile, des phénomènes d'augmentation locale de résistance peuvent intervenir, et ces phénomènes ont la spécificité de créer un courant inférieur aux calibres des protections, mais localement suffisant pour échauffer en interne l'équipement. L'invention vise à remédier à cet inconvénient, en proposant un procédé de gestion des courants anormaux dans un réseau électrique d'un véhicule à l'arrêt. Par véhicule à l'arrêt, on entend un véhicule dont le moteur est coupé, et dont tous les organes consommateurs sont à leurs consommations de veille.

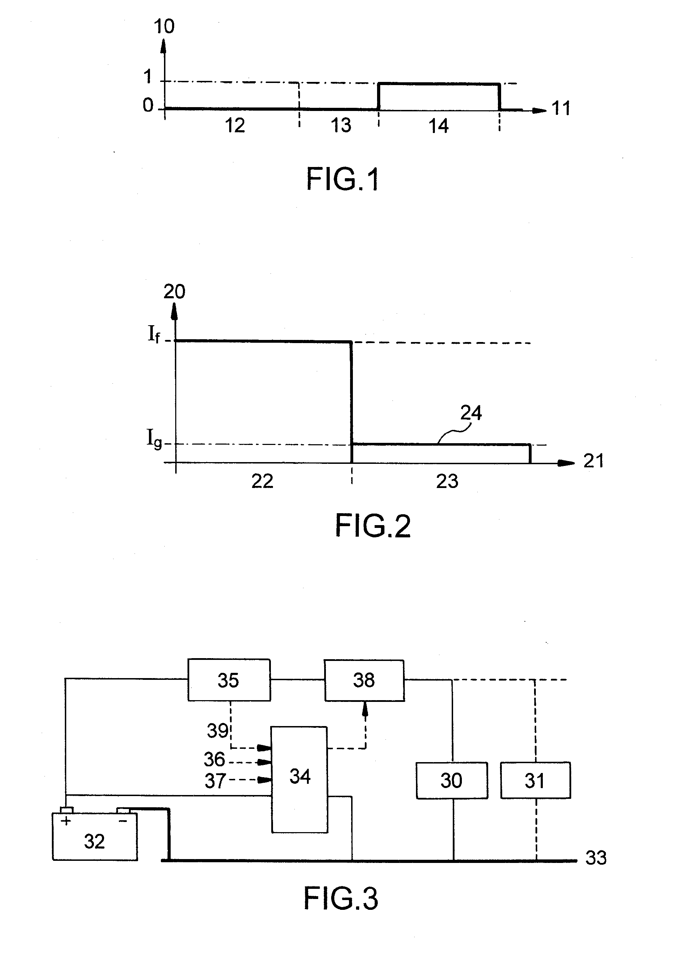

La figure 1 montre sur l'axe 10 l'activation ou désactivation du procédé de gestion en fonction des différentes phases de vie du véhicule, présentées sur l'axe 11.

Quand le moteur du véhicule est en fonctionnement, c'est à dire pendant une phase de roulage 12, le procédé est inactif. Cette inactivité est représentée sur le graphe de la figure 1 par l'état 0.

Une phase d'arrêt d'un véhicule peut être caractérisé par deux états différents du véhicule, ces états se distinguant en fonction d'événements du client sur le véhicule.

Le premier état correspondant à l'absence du client dans le véhicule, sans aucune prestation électrique/électronique activée. Dans ce cas, les réseaux de communication du véhicule « s'endorment » progressivement pour atteindre un état stable correspondant à une phase 14 dite de « veille des consommateurs ». Dans cette situation, les courants de veille sont quantifiables et tout courant anormal devient identifiable. Le procédé de gestion est alors actif, ce mode actif étant représenté par l'état 1 sur la figure 1.

Le deuxième état correspond à une phase « arrêt avec prestations en fonctionnement » 13. Dans cet état, un utilisateur est présent dans le véhicule, et il active certaines prestations interdisant la mise en veille des réseaux de communication du véhicule. Ainsi, le profil de consommation des organes consommateurs n'est pas maîtrisable, et le procédé de gestion est donc inactif dans ce cas, ainsi qu'illustré sur la figure 1.

Le procédé de gestion proposé par l'invention comprend ainsi les étapes suivantes :
- on mesure la valeur du courant dans au moins un organe consommateur en veille, implanté dans le véhicule, dit organe à gérer,
- on compare cette valeur à une valeur correspondant à la consommation typique de cet organe en mode veille, dite valeur de référence, et
- dans le cas où la valeur mesurée est supérieure à la valeur de référence pendant une durée prédéterminée, on limite l'alimentation en courant de l'organe consommateur en veille.

Selon les réalisations, la limitation peut consister en une réduction de l'alimentation, mais tout en conservant une certaine valeur de courant, non nulle, dans l'organe, ou alors en une limitation pouvant aller jusqu'à la coupure totale de l'alimentation.

Dans une réalisation, le procédé est tel que la valeur du courant mesurée est la valeur du courant dans l'organe à gérer.

Un dépassement du courant par rapport au courant de référence peut avoir plusieurs origines :
- une augmentation anormale du courant de fuite des organes consommateurs avec la création progressive d'une résistance locale,
- un réveil anormal suite à un ordre erroné,
- un pic de consommation normal sur un temps bref, correspondant à un fonctionnement normal pendant la phase d'arrêt, et
- un dysfonctionnement de l'organe consommateur. Le déclenchement de la limitation d'alimentation s'opère au-delà d'une durée prédéterminée. En effet, les pics impulsionnels de courant, par rapport aux spécificités fonctionnelles et technologiques des consommateurs, peuvent être considérés comme une situation normale sur une période donnée ; ils peuvent, notamment, correspondre à des appels de courant lors de réveil de consommateurs. En revanche, il est possible que l'on souhaite limiter l'alimentation dans tous les cas dès dépassement du courant de référence, et dans ce cas la durée prédéterminée peut être nulle.

Les organes implantés dans un véhicule nécessitent parfois une alimentation permanente pour des besoins fonctionnels même pendant les périodes de veille de ces organes.

C'est donc pendant ces périodes de veille, phase 14 de la figure 1, que l'on peut constater d'éventuels courants anormaux. A cet effet, dans une réalisation, le procédé est tel que l'on mesure pendant la période de veille le courant consommé par l'organe.

Ainsi qu'expliqué précédemment, un procédé de gestion tel que décrit ici ne peut être utilisé que pour des organes consommateurs pendant leurs consommations électriques de veille. Or, ce procédé ayant un fonctionnement séquentiel, il peut arriver qu'un organe soit en veille à l'instant T, et qu'à l'instant T+1, au moment de la mesure du courant et de la comparaison, il soit de nouveau en mode actif avec une consommation électrique plus élevée, ayant reçu un ordre de réveil entre l'instant T et l'instant T+1. Dans ce cas, le procédé risque de limiter l'alimentation électrique de l'organe, ce qui aurait pour conséquence un mauvais fonctionnement. Afin d'éviter cela il est utile que, dans une réalisation, le procédé comprenne l'étape, dans le cas où la valeur mesurée est supérieure à la valeur de référence, et avant de limiter l'alimentation en courant, de vérifier si l'organe à gérer a reçu un ordre de réveil. Si tel est le cas, la limitation de courant est alors inhibée.

L'ordre de réveil est, par exemple, envoyé par l'organe à gérer suite à une action initiée par un utilisateur du véhicule ou par un autre organe du circuit électronique du véhicule. Une action initiée par un utilisateur est, par exemple, le fait de commander l'ouverture ou le démarrage du véhicule.

Ainsi que mentionné précédemment, les courants anormaux dans un organe peuvent être dus à une erreur dans la réception ou la transmission de l'ordre d'endormissement, ou à un dysfonctionnement de l'organe. Dans certains cas, ces problèmes d'erreur ou de dysfonctionnement apparaissent au niveau d'un produit logiciel implanté dans l'organe. Dans de tels cas, une simple coupure d'alimentation puis réalimentation de l'organe consommateur, impliquant un redémarrage et une simple réinitialisation du logiciel peuvent parfois suffire à corriger le dysfonctionnement. Les organes sont d'ailleurs généralement dotés d'une tension en deçà de laquelle un redémarrage se produit.

Ainsi, dans une réalisation, le procédé est tel que, dans le cas où une tension de redémarrage est affectée à un organe à gérer, et lorsque la tension aux bornes de l'organe atteint cette tension de redémarrage, l'organe à gérer redémarre, et on compte le nombre de redémarrages successifs.

Le fait de compter le nombre de redémarrages successifs permet d'éviter que l'organe ne rentre dans un cycle redémarrage/limitation infini. En effet, dans le cas où le redémarrage logiciel ne suffit pas à régler le dysfonctionnement, les courants de fuite sont toujours présents dans l'organe, ce qui a pour conséquence de déclencher une nouvelle limitation de courant. Ainsi, la tension aux bornes du composant diminue de nouveau, jusqu'à atteindre une fois de plus la tension de redémarrage.

En revanche, il est vrai que le logiciel peut, parfois, nécessiter plusieurs redémarrages successifs avant de retrouver un fonctionnement normal.

Afin de permettre ces redémarrages multiples, dans une réalisation, le procédé est tel que, dans le cas où on a atteint la tension de redémarrage, mais que le nombre de redémarrages successifs est inférieur à une valeur déterminée, par exemple trois, on désactive la limitation de courant.

En revanche, lorsque le nombre de redémarrages successifs est supérieur à un nombre prédéterminé, par exemple trois, cela signifie que le dysfonctionnement ne peut pas être réparé de cette façon. Dans ce cas, dans une réalisation, le procédé comprend l'étape d'effectuer une ou plusieurs des actions suivantes :
- ouverture du circuit d'alimentation électrique de l'organe, afin d'éviter de perdre inutilement de l'énergie, et pour protéger l'organe d'un éventuel échauffement,
- remise à zéro du nombre de redémarrages successifs, et
- émission d'un signal d'avertissement de dysfonctionnement.

Le signal d'avertissement est, par exemple, destiné à un utilisateur du véhicule, et prend la forme d'une diode qui s'allume sur le tableau de bord du véhicule, ou d'un bip sonore, ou encore d'un texte qui s'affiche sur un écran du tableau de bord.

Généralement, le procédé sera tel que les trois actions citées sont réalisées, simultanément ou successivement, lorsqu'un organe est toujours en défaut après trois redémarrages successifs.

Une fois que le circuit d'alimentation d'un organe est ouvert, dans une réalisation, le procédé comprend l'étape de tester régulièrement l'organe afin de vérifier si le défaut responsable de la fuite de courant a été corrigé.

En effet, ce défaut peut avoir été réparé par une personne extérieure au véhicule, ou bien il peut avoir été résolu de manière interne au circuit électronique du véhicule. Dans tous les cas, il est utile de vérifier régulièrement l'état de cet organe, afin d'éviter de laisser un organe en état de bon fonctionnement à l'état inactif.

A cet effet, si l'on constate que le défaut a été corrigé, le procédé comprend, dans une réalisation, l'étape de fermer le circuit d'alimentation en courant de l'organe électrique, ce qui permet à l'organe de retrouver un fonctionnement normal.

L'invention concerne également un dispositif de gestion des courants de fuite d'organes consommateurs, dans le réseau électrique d'un véhicule à l'arrêt, le dispositif comportant :
- des moyens (35) pour mesurer la valeur du courant dans au moins un organe consommateur en veille implanté dans le véhicule, dit organe à gérer, ces moyens étant par exemple intégrés dans un bloc de surveillance de courant,
- des moyens (34) pour comparer cette valeur à une valeur correspondant à la consommation typique de cet organe en mode veille, dite valeur de référence, ces moyens étant par exemple intégrés dans une unité de contrôle, et
- des moyens (38) pour, dans le cas où la valeur mesurée est supérieure à la valeur de référence pendant une durée déterminée, limiter l'alimentation en courant de l'organe en veille, ces moyens étant par exemple intégrés dans un bloc de limitation du courant.

Afin de vérifier que la valeur mesurée est supérieure à la valeur de référence pendant une durée déterminée, le dispositif comprend également, dans une réalisation, des moyens de mesure du temps.

Dans une réalisation, le dispositif peut avoir une implantation globale ou locale sur le réseau de distribution.

Le bloc de surveillance de courant permet, par exemple, de faire l'acquisition du courant transité sur une ou plusieurs lignes de distribution de l'installation électrique.

Le bloc de limitation de courant électrique, quant à lui, permet notamment de limiter ou de couper le courant électrique circulant sur une ou plusieurs lignes de distribution de l'installation électrique.

Le bloc unité de contrôle est, dans une réalisation, composé d'entrées/sorties et sa fonction est de commander et gérer les blocs de limitation de courant et de surveillance de courant.

Dans une réalisation, le dispositif est tel que la valeur de courant mesurée est la valeur de courant dans l'organe à gérer.

Dans une réalisation, le dispositif comprend des moyens pour, dans le cas où la valeur mesurée est supérieure à la valeur de référence, vérifier si l'organe à gérer a reçu un ordre de réveil, les moyens de limitation de l'alimentation étant désactivés en cas de réveil.

Dans une réalisation, le dispositif est tel que, dans le cas où une tension de redémarrage est affectée à un organe à gérer, et lorsque la tension aux bornes de l'organe atteint cette tension de redémarrage, l'organe à gérer redémarre et on incrémente un compteur de redémarrage de l'organe à gérer.

Dans une réalisation, le dispositif est tel que, lorsque la valeur du compteur de redémarrage est inférieure à une valeur prédéterminée, par exemple trois, les moyens de limitation de l'alimentation sont désactivés.

Dans une réalisation, le dispositif comprend des moyens pour :
- ouvrir le circuit d'alimentation électrique de l'organe,
- remettre à zéro le compteur de redémarrage, et
- émettre un signal d'avertissement de dysfonctionnement,
ces moyens étant destinés à être utilisés dans le cas où la valeur du compteur de redémarrage est supérieure à une valeur prédéterminée, par exemple trois.

Dans une réalisation, le dispositif comprend des moyens pour, lorsque le circuit d'alimentation d'un organe est ouvert, tester régulièrement l'organe pour vérifier si le défaut responsable de la fuite de courant a été corrigé.

Dans une réalisation, le dispositif est tel que, lorsque le défaut a été corrigé, les moyens de limitation de courant sont désactivés.

L'invention concerne également un véhicule automobile mettant en oeuvre un procédé tel que décrit précédemment, et/ou comprenant un dispositif tel que décrit précédemment.

D'autres avantages et caractéristiques de l'invention apparaîtront au vu de la description de certains de ses modes de réalisation, cette description étant effectuée à titre non limitatif à l'aide des figures sur lesquelles :
- la figure 1, déjà décrite, représente les différentes phases de fonctionnement d'un véhicule,
- la figure 2 représente la valeur de limitation de courant dans un procédé conforme à l'invention,
- la figure 3 montre un schéma logique d'un système mettant en oeuvre l'invention,
- la figure 4 montre l'évolution des grandeurs électriques dans un organe géré par un procédé de gestion conforme à l'invention,
- la figure 5 représente un graphe de stratégie d'un procédé conforme à l'invention.

La figure 2 permet de comparer l'effet d'un procédé de gestion conforme à l'invention à l'effet d'un procédé de limitation de courant existant, utilisant un fusible.

Le graphe de cette figure représente l'évolution dans le temps 21 du courant de ligne 20 circulant dans un organe consommateur. La valeur de courant If correspond à la valeur limite acceptable par le fusible, c'est à dire la valeur au-delà de laquelle le fusible fond.

Comme décrit précédemment, un procédé selon l'invention n'est actif que lorsque les organes du véhicule dans lequel il est installé sont dans un état 23 de veille.

Ainsi, lorsqu'un organe électrique n'est pas en veille (état 22), le courant qui le traverse sera limité par la valeur I_{f}, de manière similaire à ce qui aurait lieu dans un circuit électronique ne mettant pas en oeuvre un procédé de gestion tel que décrit ici. En effet, il serait dangereux de prévoir un circuit électronique de moteur sans aucune limitation lorsque les organes sont en fonctionnement.

En revanche, lorsque l'organe est en veille (état 23), la limitation de courant est différente selon qu'on utilise un procédé de gestion additionnel ou non.

En effet, dans le cas où il n'y a pas de procédé de gestion, la valeur maximale de courant est celle déterminée par le calibre du fusible, à savoir I_{f}. Or, un organe en veille consomme normalement moins d'énergie qu'un organe en fonctionnement, et il est donc utile que la limitation de courant intervienne pour des valeurs de courants plus faibles.

Ainsi, lorsque l'organe est dans l'état 23 et que le concept est actif, le courant est limité par la valeur I_{g}. La zone de fonctionnement de l'organe sans limitation est donc réduite à la zone 24, ce qui permet de repérer rapidement un éventuel dysfonctionnement.

La figure 3 montre, d'un point de vue logique, la mise en oeuvre d'un procédé conforme à l'invention, dans un circuit électronique pour la surveillance de deux organes consommateurs. Ces organes 30 et 31, ainsi que les autres éléments présents dans le circuit, sont alimentés par une batterie 32, reliée à la masse 33 de la carrosserie du véhicule.

Le procédé de gestion est mis en oeuvre par une unité de contrôle 34. L'activation ou désactivation de cette unité de contrôle 34 dépend de l'état des organes présents dans le véhicule. L'unité de contrôle 34 est informée de cet état par le biais de signaux de demande d'endormissement ou de réveil des organes qui lui sont communiqués via l'entrée 36.

Lorsqu'elle détecte un signal de d'endormissement, l'unité 34 prend en compte la valeur instantanée 39 du courant débité par la batterie 32 et transité sur la ligne. Cette valeur est mesurée par un circuit 35 de mesure de courant.

L'unité 34 compare cette valeur 39 à une valeur de référence 37, correspondant à la consommation typique en veille de l'organe dont elle a détecté l'endormissement.

Si la valeur 39 est supérieure à la valeur de référence 37, l'unité de contrôle 34 déclenche la procédure de limitation de courant, via un circuit 38 de régulation de courant.

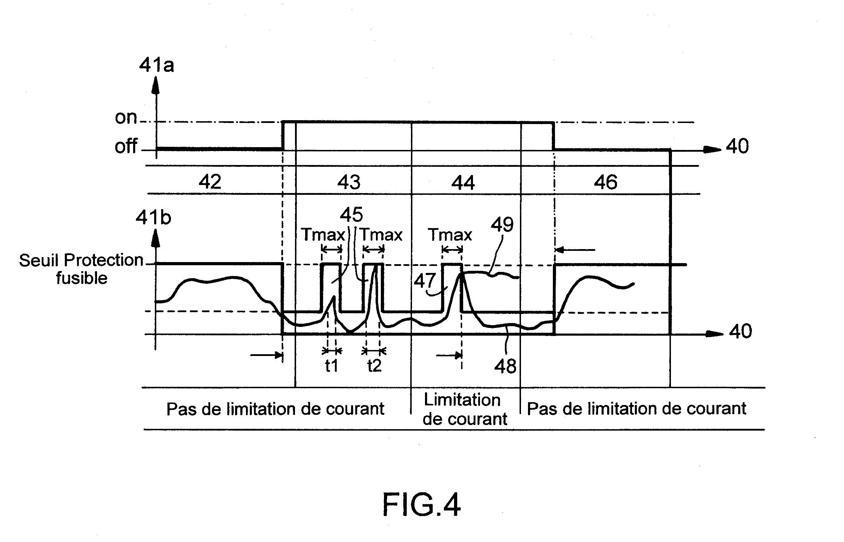

L'effet de cette régulation sur le fonctionnement électrique de l'appareil est illustré sur le graphique de la figure 4.

Ce graphique représente l'évolution, dans le temps 40, de deux grandeurs représentatives de l'état d'un organe consommateur géré, à savoir l'état 41a d'endormissement de l'organe, et l'intensité 41b circulant dans l'organe.

Lorsque l'organe est en fonctionnement normal ou en phase de vie transitoire correspondant à la fin du roulage, et au début de l'arrêt (phase 42), c'est à dire lorsque l'état 41a d'endormissement est au niveau « OFF », l'intensité 41b varie normalement. Cette phase correpond à un client quittant son véhicule, entraînant l'endormissement progressif des réseaux de communication du véhicule, après un certain temps. Une demande d'endormissement est alors envoyée à l'unité de contrôle, entraînant l'activation de la surveillance.

On est alors dans une phase 43 de surveillance, permettant de détecter un éventuel courant anormal. Cette phase de surveillance correspond à une phase d'arrêt du véhicule. Les réseaux de communication sont endormis, les consommateurs sont à leurs niveaux de consommation de veille nominale. Durant cette phase apparaissent des pics de courant 45, pendant des durées t1 et t2. Ces pics de courant sont dus à des besoins fonctionnels, et en conséquence ils ne doivent pas être détectés en tant que courants anormaux. A cet effet, on a fixé un temps Tmax, correspondant à la durée fonctionnelle normale de consommation, et en deçà duquel le processus de limitation n'est pas enclenché. Ici, les durées t1 et t2 sont inférieures à la durée Tmax, et les pics de courant n'ont donc aucune conséquence au niveau de la gestion des courants anormaux.

Au contraire, dans la phase 44, le pic de courant 47 a une durée supérieure à la durée Tmax, sans être accompagné d'une demande de réveil. En conséquence, cette consommation est considérée comme anormale par l'unité de contrôle, qui met en place une réponse adaptée, en commandant le bloc Circuit de limitation de courant. Parmi les réponses adaptées, on peut citer la limitation à plusieurs seuils de courant de l'alimentation des organes consommateurs, ou la coupure totale d'alimentation.

Dans ce cas, le résultat de la limitation est que le courant diminue, en suivant la courbe 48, alors que sans limitation, il aurait continué selon le fonctionnement anormal illustré par la courbe 49. La phase 46 illustrée sur la figure 4 correspond à une phase transitoire au cours de laquelle le client monte dans son véhicule. Ainsi, les réseaux de consommations sont réveillés, et les organes consommateurs quittent leur mode de veille. Ce réveil se traduit par l'envoi d'une demande de réveil à l'unité de contrôle, ayant pour conséquence la désactivation de la surveillance.

Lorsqu'une tension de redémarrage V_{R} est affectée à l'organe consommateur à gérer, cette tension ayant généralement une valeur faible, l'organe redémarre dès que la tension aux bornes de l'organe consommateur atteint cette valeur V_{R}.

Le fait de disposer de tensions de redémarrage pour chaque organe peut permettre de gérer les différents organes indépendamment les uns des autres, de manière plus efficace que dans les installations actuellement utilisées.

En effet, lorsqu'un dispositif classique de commutation est présent dans un circuit, il est généralement calibré de façon à être activé dès qu'un organe risque d'être affecté. L'activation d'un tel dispositif de protection a pour conséquence de couper l'alimentation de tous les organes du circuit. Or, il est envisageable de disposer, dans un circuit, d'organes n'ayant pas les mêmes caractéristiques et les mêmes seuils de fonctionnement.

Ainsi, dans certains modes de réalisation de l'invention, il est possible de remédier à cet inconvénient en affectant aux différents organes des tensions de redémarrage telles que les organes ne redémarrent pas tous en même temps.

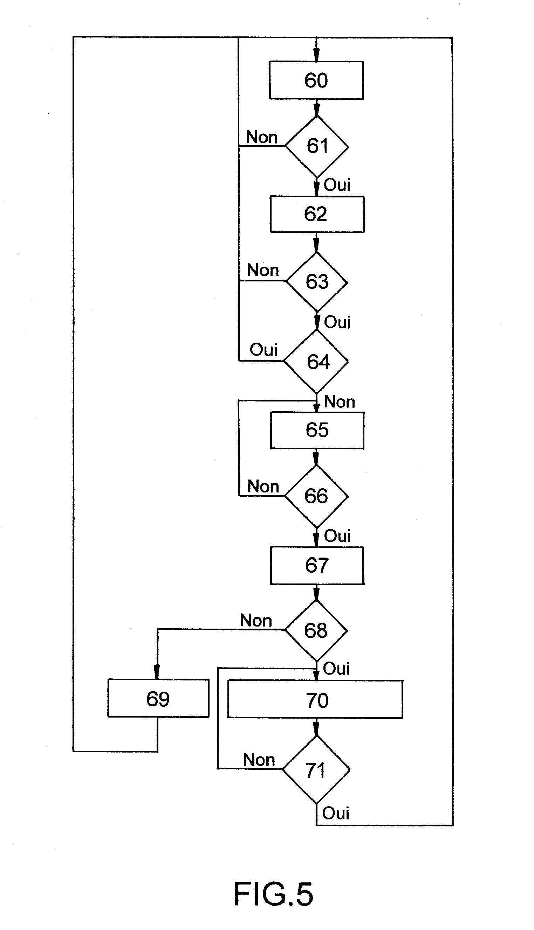

Le déroulement global d'un procédé selon l'invention est illustré par un graphe de stratégie présent en figure 5. Ce graphe est écrit en se référant également aux autres figures.

L'unité de contrôle 34 lance tout d'abord une procédure d'initialisation 60. Cette procédure implique tout d'abord la vérification 61 que le véhicule est à l'arrêt, avec toutes les prestations électroniques en veille. Cette vérification est effectuée, notamment, à l'aide du signal d'information 36. S'il s'avère que le véhicule n'est pas à l'arrêt (événement « NON » en sortie du bloc 61), on retourne à l'étape d'initialisation.

En revanche, si le véhicule est effectivement dans un état correspondant aux conditions d'application du procédé de gestion, l'unité de contrôle déclenche alors l'étape 62 d'acquisition du courant circulant dans un organe à gérer. Ce courant est mesuré par le circuit 35 et est comparé, au cours de l'étape 63, à un courant de référence 37. Si le courant mesuré est supérieur au courant de référence (événement « OUI » sur le graphe de référence), il est nécessaire de procéder à l'activation 65 de la limitation d'alimentation en courant.

Au préalable, l'unité de contrôle procède à un dernier contrôle 64, pour vérifier que l'organe n'a pas reçu, entre temps, d'ordre de réveil. Si un tel ordre a été reçu (événement « OUI » en sortie du bloc 64), la procédure est annulée, et on se retrouve de nouveau dans l'étape d'initialisation.

Dans le cas contraire, la limitation est déclenchée, ayant pour conséquence de faire diminuer la tension dans le circuit. Cette tension est mesurée en permanence (étape 66 du graphe de la figure 6). Lorsque la tension de redémarrage d'un organe est atteinte (événement « OUI » en sortie du bloc 66), on procède à l'incrémentation 67 d'un compteur de redémarrage géré, par exemple, par l'unité de contrôle. On effectue ensuite une comparaison 68 entre la valeur de ce compteur et une valeur limite prédéterminée, par exemple trois. Deux cas de figures se présentent alors :
- si la valeur du compteur est inférieure ou égale à la valeur limite, l'organe redémarre, et on procède à la désactivation 69 de la limitation d'alimentation ;
- si la valeur du compteur est supérieure à la valeur limite, cela signifie que l'organe a été redémarré plusieurs fois, mais qu'il est toujours en défaut. En conséquence, il est nécessaire d'interrompre son fonctionnement. A cet effet, dans l'étape 70, on effectue plusieurs actions, qui consistent à ouvrir le circuit d'alimentation de l'organe et à émettre un signal d'avertissement pour signaler le dysfonctionnement à l'utilisateur. Dans le même temps, on remet à zéro la valeur du compteur de redémarrage.

Dans ce cas, l'unité de contrôle effectue ensuite régulièrement une vérification 71 permettant de détecter une éventuelle résolution du défaut. Dans le cas où le défaut est réparé, la procédure est de nouveau initialisée.

## Revendications

1. Procédé de gestion des courants anormaux d'organes consommateurs de courant électrique, dans le réseau électrique d'un véhicule à l'arrêt, le procédé comportant les étapes suivantes :
- on mesure (35, 62) la valeur du courant (39) dans au moins un organe en veille implanté dans le véhicule, dit organe à gérer,
- on compare (38, 63) cette valeur (39) à une valeur (37) correspondant à la consommation typique de cet organe en mode veille, dite valeur de référence, et
- dans le cas où la valeur mesurée (39) est supérieure à la valeur de référence (37) pendant une durée prédéterminée, on limite (38, 65) l'alimentation en courant de l'organe en veille.

2. Procédé selon la revendication 1 dans lequel la valeur de courant mesurée est la valeur du courant dans (30, 31) l'organe à gérer.

3. Procédé selon la revendication 1 ou 2 comprenant l'étape, dans le cas où la valeur mesurée (39) est supérieure à la valeur de référence (37) et avant de limiter (38, 65) l'alimentation en courant, de vérifier (64) si l'organe à gérer a reçu un ordre de réveil, la limitation de l'alimentation étant inhibée en cas de réveil.

4. Procédé selon l'une des revendications précédentes comprenant une étape dans laquelle, dans le cas où une tension de redémarrage est affectée à un organe à gérer, et lorsque la tension aux bornes de l'organe atteint (66) cette tension de redémarrage, l'organe à gérer redémarre.

5. Procédé selon la revendication 4 comprenant une étape dans laquelle on compte (67) le nombre de redémarrages successifs, et lorsque le nombre de redémarrages successifs est inférieur à une valeur prédéterminée, par exemple trois, on désactive (69) la limitation de courant.

6. Procédé selon la revendication 4 comprenant l'étape, lorsque le nombre de redémarrages successifs est supérieur à une valeur prédéterminée, par exemple trois, d'effectuer (70) une ou plusieurs des actions suivantes :
- ouverture du circuit d'alimentation électrique de l'organe à gérer,
- remise à zéro du nombre de redémarrages successifs, et
- émission d'un signal d'avertissement de dysfonctionnement.

7. Procédé selon la revendication 6 comprenant l'étape, lorsque le circuit d'alimentation d'un organe à gérer est ouvert, de tester (71) régulièrement l'organe afin de vérifier si le défaut responsable de la fuite de courant a été corrigé.

8. Procédé selon la revendication 7 comprenant l'étape, lorsque le défaut a été corrigé, de fermer le circuit d'alimentation en courant de l'organe à gérer.

9. Dispositif de gestion des courants de fuite d'organes consommateurs, dans le réseau électrique d'un véhicule à l'arrêt, le dispositif comportant :
- des moyens (35) pour mesurer la valeur du courant dans au moins un organe consommateur en veille implanté dans le véhicule, dit organe à gérer, ces moyens étant par exemple intégrés dans un bloc de surveillance de courant,
- des moyens (34) pour comparer cette valeur à une valeur correspondant à la consommation typique de cet organe en mode veille, dite valeur de référence, ces moyens étant par exemple intégrés dans une unité de contrôle, et
- des moyens (38) pour, dans le cas où la valeur mesurée est supérieure à la valeur de référence pendant une durée déterminée, limiter l'alimentation en courant de l'organe consommateur en veille, ces moyens étant par exemple intégrés dans un bloc de limitation du courant.

10. Dispositif selon la revendication 9, dans lequel la valeur de courant mesurée est la valeur de courant dans l'organe à gérer (30, 31).

11. Dispositif selon la revendication 9 ou 10 comprenant des moyens pour, dans le cas où la valeur mesurée est supérieure à la valeur de référence, vérifier si l'organe à gérer a reçu un ordre de réveil, les moyens de limitation de l'alimentation étant désactivés en cas de réveil.

12. Dispositif selon l'une des revendications 9 à 11 tel que, dans le cas où une tension de redémarrage est affectée à un organe à gérer, et lorsque la tension aux bornes de l'organe atteint cette tension de redémarrage, l'organe à gérer redémarre et on incrémente un compteur de redémarrage de l'organe à gérer.

13. Dispositif selon la revendication 12 dans lequel, lorsque la valeur du compteur de redémarrage est inférieure à une valeur prédéterminée, par exemple trois, les moyens de limitation de l'alimentation sont désactivés.

14. Dispositif selon la revendication 12 comprenant des moyens pour :
- ouvrir le circuit d'alimentation électrique de l'organe,
- remettre à zéro le compteur de redémarrage, et
- émettre un signal d'avertissement de dysfonctionnement,
ces moyens étant destinés à être utilisés dans le cas où la valeur du compteur de redémarrage est supérieure à une valeur prédéterminée, par exemple trois.

15. Dispositif selon la revendication 14 comprenant des moyens pour, lorsque le circuit d'alimentation d'un organe est ouvert, tester régulièrement l'organe pour vérifier si le défaut responsable de la fuite de courant a été corrigé.

16. Dispositif selon la revendication 15 dans lequel, lorsque le défaut a été corrigé, les moyens de limitation de courant sont désactivés.

17. Véhicule mettant en oeuvre un procédé conforme à l'une des revendications 1 à 8 et/ou comprenant un dispositif conforme à l'une des revendications 9 à 16.
